# EUROPÄISCHE PATENTSCHRIFT

(11) **EP 1 162 415 B1**
(45) Veröffentlichungstag und Bekanntmachung des Hinweises auf die Patenterteilung: **29.06.2005**
(21) Anmeldenummer: 01110560.8
(22) Anmeldetag: 30.04.2001
(51) Int. Cl.: F25B 17/08, F24F 5/00, A41D 13/005

(54) **Sorptionsvorrichtung zum Heizen und Kühlen von Gasströmen**
Sorption device for heating or cooling gas flows
Dispositif à sorption pour le rechauffement ou le refroidissement des écoulements de gaz

(30) Priorität: 09.06.2000 DE 10028030
(43) Veröffentlichungstag der Anmeldung: 12.12.2001
(73) Patentinhaber: SD & E System Design & Engineering GmbH, 88677 Markdorf (DE)
(72) Erfinder: Maier-Laxhuber, Peter, Dr., 85386 Dieterseheim (DE); Becky, Andreas, 85521 Ottobrunn (DE); Weiss, Rüdiger, Dr., 88677 Markdorf (DE); Wörz, Reiner, Dipl.-Ing., 85293 Reichertshausen (DE); Grupp, Christoph, Dipl.-Ing., 80339 München (DE); Just, Jürgen, 88699 Frickingen (DE); Totschnig, Leo, Dipl.-Phys., 80939 München (DE); Gehse, Hartmut, Dipl.-Ing., 88677 Markdorf (DE)
(74) Vertreter: Becker Kurig Straus

(56) Entgegenhaltungen:
- EP-A- 0 203 558
- EP-A- 0 378 996
- EP-A- 0 527 466
- DE-A- 4 437 950
- DE-A- 4 438 619
- DE-A- 19 539 103
- FR-A- 2 706 740
- FR-A- 2 712 850
- US-A- 4 231 772
- US-A- 5 291 750
- US-A- 5 441 716
- US-A- 6 105 382

## Beschreibung

Die Erfindung betrifft eine Sorptionsvorrichtung zum Heizen und Kühlen von Gasströmen gemäß dem Oberbegriff des Anspruchs 1.

Sorptionsvorrichtungen sind Apparate, in denen ein flüssiges oder festes Sorptionsmittel ein zweites, bei tieferen Temperaturen siedendes Mittel, das Arbeitsmittel dampfförmig unter Wärmefreisetzung sorbiert (Sorption). Das Arbeitsmittel verdampft dabei in einem Verdampfer unter Wärmeaufnahme. Nachdem das Sorptionsmittel gesättigt ist, kann es durch Wärmezufuhr wieder desorbiert werden (Regeneration). Dabei dampft Arbeitsmittel aus dem Sorptionsmittel ab. Der Arbeitsmitteldampf kann rückverflüssigt werden und im Verdampfer anschließend erneut verdampfen.

Sorptionsvorrichtungen zum Kühlen mit festen Sorptionsmitteln sind aus der EP 0 368 111 und der DE-OS 34 25 419 bekannt. Sorptionsmittelbehälter, gefüllt mit Sorptionsmitteln, saugen dabei Arbeitsmitteldampf, welcher in einem Verdampfer entsteht, ab und sorbieren ihn in der Sorptionsmittelfüllung unter Wärmefreisetzung. Die Sorptionswärme muss dabei aus der Sorptionsmittelfüllung abgeführt werden. Die Kühlapparate können zum Kühlen und Warmhalten von Lebensmitteln in thermisch isolierten Boxen eingesetzt werden.

Das aus der EP 0 368 111 bekannte Sorptionskühlsystem besteht aus einer transportablen Kühleinheit und einer davon separierbaren, stationären Ladestation. Die Kühleinheit besteht aus einem Sorptionsbehälter, gefüllt mit einem festen Sorptionsmittel und einem Verdampfer, der flüssiges Arbeitsmittel und einen darin eingebetteten Wärmetauscher enthält. Verdampfer und Sorptionsbehälter sind über eine absperrbare Dampfleitung miteinander verbunden. Durch einen im Verdampfer eingebetteten Wärmetauscher fließen flüssige Medien, die durch temperaturgeregeltes Öffnen und Schließen der Absperreinrichtung auf das gewünschte Temperaturniveau gekühlt werden. Nachdem das Sorptionsmittel mit Arbeitsmittel gesättigt ist, kann es in der Ladestation erhitzt werden. Der dabei abströmende Arbeitsmitteldampf wird im Verdampfer rückverflüssigt. Die Kondensationswärme wird durch Kühlwasser, das durch den eingebetteten Wärmetauscher strömen muss, abgeführt.

Auch die US 4,231,772 offenbart ein Sorptionssystem bei welchem durch geeignete Klappenanordnunen und Klappenstellungen die Prozesswärmen dem System über Luftströmungen zu- bzw. abgeführt werden.

Die EP 0 527 466 zeigt ein weiteres System bei welchem zusätzlich über ein Ventil die ebenfalls mittels Luftströmungen zu- und abführbaren Wärmemengen teilweise speicherbar sind.

Aufgabe der Erfindung ist es, eine Sorptionsvorrichtung aufzuzeigen, die sowohl zum Heizen als auch alternativ zum Kühlen speziell von Gasströmen geeignet ist.

Gelöst wird diese Aufgabe durch die kennzeichnenden Merkmale des Anspruchs 1. Die abhängigen Ansprüche zeigen weitere erfinderische Vorrichtungen bzw. Verfahren zur Verwendung der Sorptionsvorrichtung auf.

Eine erfindungsgemäße Sorptionsvorrichtung enthält demnach ein Sorptionsmittel innerhalb eines Sorptionsmittel-Behälters, ein Ventil und flüssiges Arbeitsmittel innerhalb eines Verdampfers. Über einen Sorptionsmittel-Wärmetauscher wird dem Sorptionsmittel während der Regenerations-Phase Wärme zugeführt und während der Sorptions-Phase entzogen. Über einen Arbeitsmittel-Wärmetauscher wird dem Arbeitsmittel während der Sorptions-Phase Verdampfungswärme zugeführt und während der Regenerations-Phase Verflüssigungswärme entzogen. Die Wärmemengen werden erfindungsgemäß an bzw. von Gasströmen übertragen, die wiederum in Gasströmungskanälen zu- und abgeleitet werden. Sowohl der Sorptionsmittel-Wärmetauscher als auch der Arbeitsmittel-Wärmetauscher verfügen erfindungsgemäß an ihren Ein- und Ausgängen über Verbindungselemente, die einen leicht lösbaren und untereinander tauschbaren Anschluss an die Gasströmungskanäle für das Zu- und Abströmen der zu erwärmenden bzw. abzukühlenden Gasströme ermöglichen. Auf diese Weise kann jede Sorptionsvorrichtung entweder zum Erwärmen oder zum Kühlen eines Gasstromes verwendet werden, weil entweder der Sorptionsmittel-Wärmetauscher oder der Arbeitsmittel-Wärmetauscher mit dem gewünschten Gasströmungskanal verbunden werden kann. An die Verbindungselemente werden keine speziellen Anforderungen gestellt. Sie sollten aber die Verbindung der Strömungskanäle an die Wärmetauscher einfach, sicher, gasdicht und schnell ermöglichen. Von Vorteil ist es, wenn eine Verwechslung der Anschlüsse bzw. Verbindungen ausgeschlossen ist.

Für den Fall, dass die Verbindungselemente und die Gaskanäle symmetrisch angeordnet sind, muss die Sorptionsvorrichtung lediglich gedreht oder gekippt werden, um von der Funktion Heizen in die Funktion Kühlen zu wechseln. Die Sorptionsvorrichtung und die Kanäle müssen in diesem Fall nicht verschränkt, gekreuzt, verdreht oder auf sonstigem Wege der jeweils vorgesehenen EinbauSituation angepasst werden.

Unter Umständen kann es notwendig sein, die Aus- und Eingänge zu den Gasströmungskanälen mit separaten Gasfiltern zu schützen. Insbesondere dann, wenn die Sorptionsvorrichtung in vergifteter, kontaminierter oder verunreinigter Atmosphäre eingesetzt und gewechselt werden muss. Die separaten Gasfilter schützen dann während der Dauer des Einsatzes und des Vorrichtungswechsels vor ungefiltert einströmenden Gasen.

Von Vorteil kann es auch sein, wenn die Gasströmungskanäle mit einer Box verbunden sind und die Sorptionsvorrichtung mit zwei Einbaumöglichkeiten in die Box eingesetzt werden können. Je nach dem Einsatzzweck (Heizen oder Kühlen) ist dann der gewünschte Wärmetauscher mit den entsprechenden Gasströmungskanälen gekoppelt. Die Box kann zugleich auch die erforderlichen Luft- bzw. Gasversorgungseinheiten (z.B. Ventilatoren), Filter und Energieversorgungseinheiten enthalten und wie ein Koffer trag- oder fahrbar ausgebildet sein.

Während der Regenerations-Phase wird das Sorptionsmittel erhitzt und Arbeitsmitteldampf desorbiert. Dieser strömt durch das geöffnete oder sich selbst öffnende Ventil zum Verdampfer und kondensiert dort aus. Am Ende der Regeneration wird die Wärmezufuhr in das Sorptionsmittel unterbrochen. Die Desorption von weiterem Arbeitsmitteldampf endet damit. Das Schließen des Dampfventils verhindert die Rückströmung des Arbeitsmitteldampfes. Das desorbierte Arbeitsmittel betindet sich dann in flüssiger Form im Verdampfer. In diesem einsatzbereiten Zustand ist die Sorptionsvorrichtung beliebig lange lagerbar. Pro Kilogramm Zeolith kann eine erfindungsgemäße Sorptionsvorrichtung 130 Wattstunden Kälte und 160 Wattstunden Wärme verlustlos über einen beliebig langen Zeitraum speichern.

Es ist vorteilhaft, den Sorptionsmittel-Behälter und gegebenenfalls den Sorptionsmittel-Wärmetauscher mit einer temperaturstabilen thermischen Isolierung zu versehen um die Wärmeverluste an die Umgebung beim Regenerationsprozess zu minimieren. Die Regeneration kann in einer separaten Regenerations-Vorrichtung durchgeführt werden. Besonders energieeffizient ist es, wenn dabei der Gasstrom, der aus dem Arbeitsmittel-Wärmetauscher kommt, nachdem er dort die Verflüssigungswärme aufgenommen hat, mittels einer Heizung auf Temperaturen von etwa 300°C erhitzt wird, um ihn dann in den Sorptionsmittel-Wärmetauscher einzuleiten. Auf diese Weise wird es möglich, mit nur einem einzigen Ventilator und einem einzigen Gasstrom beide Wärmetauscher zu bedienen und den Gasstrom durch die Verflüssigungswärme vorzuheizen. Auf diese Weise wird die Regenerations-Vorrichtung einfach im Aufbau, sicher im Betrieb und zugleich energiesparend im Betrieb.

Zur Einleitung der Sorptions-Phase wird das Ventil geöffnet. Arbeitsmitteldampf kann nunmehr vom Verdampfer in den Sorptionsmittel-Behälter strömen und vom Sorptionsmittel exotherm sorbiert werden. Die dampfende Arbeitsmittelmenge im Verdampfer kühlt sich und den im Wärmetauscher vorbeiströmenden Gasstrom ab. Um die maximale Kälteleistung zu erzeugen, muss das Sorptionsmittel seine Sorptionswärme in einem Wärmetauscher an einen Gasstrom abführen können. Eine besonders intensive Kühlwirkung erreicht man, wenn der Sorptionsmittel-Behälter eine ausreichend große Wärmetauscherfläche für den ihn durchströmenden Gasstrom aufweist. Vorteilhaft sollte das Sorptionsmittel auf niedrige Temperaturen gekühlt werden um die maximale Arbeitsmittelmenge bei ausreichend tiefen Temperaturen sorbieren zu können.

Besonders vorteilhaft ist die Verwendung des Sorptionsstoffpaares Zeolith/Wasser. Zeolith ist ein kristallines Mineral, das aus einer regelmäßigen Gerüststruktur aus Silizium- und Aluminiumoxiden besteht. Diese Gerüststruktur enthält Hohlräume, in welchen Wassermoleküle unter Wärmefreisetzung sorbiert werden können. Innerhalb der Gerüststruktur sind die Wassermoleküle starken Feldkräften ausgesetzt, welche die Moleküle im Gitter binden und verflüssigen. Die Stärke der auf die Wassermoleküle einwirkenden Bindungskräfte ist abhängig von der bereits in der Gerüststruktur enthaltenen Wassermenge und der Temperatur des Zeolithen. Für den praktischen Gebrauch können pro 100 Gramm Zeolith bis zu 25 Gramm Wasser sorbiert werden. Zeolithe sind feste Stoffe ohne störende Wärmeausdehnung bei der Sorptions- bzw. Desorptionsreaktion. Die Gerüststruktur ist von allen Seiten für die Wasserdampfmoleküle frei zugänglich. Die Sorptionsvorrichtungen sind deshalb in jeder Lage einsatzfähig.

Die Verwendung von Wasser als Arbeitsmittel gestattet es, den erforderlichen Regelungsaufwand auf ein Minimum zu reduzieren. Beim Verdampfen von Wasser unter Vakuum kühlt sich die Wasseroberfläche auf 0°C ab und gefriert bei fortgesetzter Verdampfung zu Eis. Diese Eisschicht wächst schnell, bis der dadurch entstehende Druckabfall ihr eigenes Wachstum reduziert. Die Eisschicht kann somit vorteilhaft zur Regelung der Gastemperatur benutzt werden. Bei geringer Wärmeabgabe an den Gasstrom wächst die Eisschicht, bei sehr großer schmilzt sie ab. Dem wässrigen Arbeitsmittel können auch den Gefrierpunkt absenkende Stoffe beigemischt sein, wenn die Gastemperatur unter 0°C abgesenkt werden soll.

Verwendbar sind jedoch auch andere Sorptionsmittelpaarungen, bei denen das Sorptionsmittel fest ist und auch bei der Sorptionsreaktion fest bleibt. Feste Sorptionsmittel haben allerdings eine geringe Wärmeleitung und einen schlechten Wärmeübergang. Da auch der Wärmeübergang von der Gasströmung auf den Sorptionsmittel-Wärmetauscher in der gleichen Größenordnung liegt, empfehlen sich prinzipiell Wärmetauscher ohne Berippung, wie beispielsweise Zylinder-, Platten- oder Rohrgeometrien. Da insbesondere Zeolithgranulate eine geringe Wärmeleitung haben, sind die Sorptionsmittel-Behälter so auszulegen, dass der durchschnittliche Wärmeleitungsweg für die umgesetzten Wärmemengen 2 cm nicht übersteigt.

Einige feste Sorptionsmittel, wie Zeolith, sind stabil genug, um auch äußere Überdrücke auf dünnwandige Behälterwände zu kompensieren. Zusätzliche Versteifungen oder dickwandige Wärmetauscherflächen sind deshalb nicht nötig. Da bei der Verwendung von Wasser als Arbeitsmittel die Sorptionsvorrichtung unter Vakuum steht und für die gesamte Funktionsdauer keine Gase in das System eindringen sollten, sind für das Ventil vakuumdichte Bauteile zu bevorzugen. Für die manuelle Betätigung haben sich Durchführungen, die durch Metallbälge abgedichtet sind, bewährt.

Für eine wirtschaftliche Betriebsweise sind Zeolithtemperaturen von 250 bis 350° C bei der Regeneration und von 40 bis 80° C bei der Sorption empfehlenswert. Besonders vorteilhaft ist die Regeneration durch einem Heißluftstrom bei einer Lufttemperatur von über 300° C. Falls die Zeolithfüllung in einer dünnen Schicht angeordnet ist, kann die Regeneration innerhalb einer Stunde abgeschlossen sein. Dabei ist darauf zu achten, dass durch ausreichende Gasströmung durch den Arbeitsmittel-Wärmetauscher die Kondensationstemperaturen unter 100°C bleiben. Bei höheren Temperaturen würde der Behälter-Innendruck größer als der äußere Luftdruck werden.

Die Sorptionsvorrichtung eignet sich insbesondere für mobile Anwendungen, bei denen keine Antriebsenergie für Klimaanlagen oder Heizanlagen verfügbar sind. Hierzu zählen batteriebetriebene Automobile und kleine Flugzeuge ebenso wie Schutzzelte, Krankentragen mit Schutzhüllen und Schutzanzüge aller Arten. Je nach Einsatzort oder Jahreszeit wird entweder Belüftung, Kühlung oder Beheizung gefordert. Eine erfindungsgemäße Sorptionsvorrichtung kann alle drei Anforderungen mit nur einem einzigen Gerät erfüllen. Besonders bei Schutzanzügen für Personen muss die Sorptionsvorrichtung leicht sein und ohne große Beschränkungen in der Bewegungsfreiheit tragbar sein. Je nach Einsatzfall kann sie beispielsweise auf dem Rücken oder vor der Brust in die Luftströmungskanäle der Schutzbekleidung integriert werden.

Zusätzlich kann ein gewisser Schutz gegen Splitter oder Projektile erzielt werden, wenn der Sorptionsmittel-Behälter und/oder der Arbeitsmittel-Behälter in geeigneter Weise der Körperform angepasst sind.

Besonders vorteilhaft ist es auch, wenn mit Feuchtigkeit angereicherte Abluft, insbesondere die ausgeatmete Luft aus Schutzmasken in den Arbeitsmittel-Wärmetauscher eingeleitet wird. Der Wasserdampfinhalt der feuchten Luft verflüssigt sich dann im Arbeitsmittel-Wärmetauscher und überträgt einen beträchtlichen Teil der aufzubringenden Verdampfungswärme an das Arbeitsmittel. Das Sorptionsmittel erhält dann Arbeitsmitteldampf auf höherem Druckniveau und kann die Sorptionswärme auf höherem Temperaturniveau über den Sorptionsmittel-Wärmetauscher gut an den austretenden Gasstrom weiterleiten, der den Schutzanzug beheizt.

Von wesentlicher Bedeutung kann es auch sein, wenn der Arbeitsmittel-Wärmetauscher die Gasströmung in mindestens zwei Stränge aufteilt, deren Austrittstemperaturen und/oder Volumenströme unterschiedlich konditioniert werden sollen. Auf diese Weise kann z.B. die in einen Schutzanzug eingeleitete Atmungsluft eine andere Temperatur oder Feuchte erhalten als die Luft, die zwischen Schutzanzughülle und Körperoberfläche das Mikroklima regelt. Erfindungsgemäß kann für derartige Aufgaben die Sorptionsvorrichtung gegebenenfalls auch mit zwei Ventilen oder zwei Arbeitsmittel-Behältern ausgestattet sein.

Beim Kühlen eines durch den Arbeitsmittel-Wärmetauscher strömenden Gasstromes kann eine erhebliche Kondensatmenge anfallen. Diese sollte aus dem Wärmetauscher gefahrlos und zugleich sinnvoll abgeführt werden. Da in der Regel der Gasstrom gegenüber der Umgebung einen leichten Überdruck hat, kann die gesammelte Kondensatmenge über kleine Öffnungen an die Umgebung abgeführt werden. Besonders sinnvoll ist es, das Kondensat in den Sorptionsmittel-Wärmetauscher einzuleiten und an den Wärmetauscheroberflächen zu verdampfen. Der Gasstrom, der die Sorptionswärme abführt, kann dadurch reduziert werden. Die Überführung des Kondensates vom Arbeitsmittel-Wärmetauscher in den Sorptionsmittel-Wärmetauscher kann auch durch separate Leitungen oder auch mittels hygroskopischer Materialien (Dochte) erfolgen.

Die Temperaturen der aus den Wärmetauschern austretenden Gasströme können über die Stellung des Ventils nach bekannten Verfahren geregelt werden. Auch der Feuchtegehalt der Gasströmungen kann neben deren Temperaturen eine Regelgröße für die Änderung der Ventilstellung darstellen.

Die Zustände der austretenden Gasströmungen können jedoch auch unabhängig von der Ventilstellung auf andere Weise geregelt werden. Um beispielsweise die Austrittstemperatur der Gasströmung aus dem Arbeitsmittel-Wärmetauscher anzuheben oder abzusenken, kann die Gasströmung durch den Sorptionsmittel-Wärmetauscher erhöht oder reduziert werden. Da sich bei geöffnetem Ventil immer das thermodynamische Gleichgewicht einstellt, hat beispielsweise eine Absenkung der Sorptionsmitteltemperatur eine Abkühlung der Arbeitsmitteltemperatur zur Folge und eine Erhöhung der Sorptionsmitteltemperatur führt zu einer Erhöhung der Verdampfungstemperatur.

Sinnvoll ist auch die Ausgestaltung des Ventils als Rückschlagventil. In diesem Fall kann die Regeneration auch bei geschlossenem Ventil durchgeführt werden. Der aus dem Sorptionsmittel abströmende Arbeitsmittel-Dampf öffnet selbsttätig das Rückschlagventil, um im Verdampfer zu kondensieren. Da das Ventil nicht geöffnet wurde, muss es bei Ende der Regenerationsphase auch nicht manuell geschlossen werden. Dies kann für die sichere Handhabung der Sorptionsvorrichtung sehr vorteilhaft sein.

Die Zusammensetzung und der Zustand der gekühlten bzw. erwärmten Gase ist für die Sorptionsvorrichtung ohne Belang. Hauptsächlich werden jedoch Luftströme zur Kühlung bzw. Erwärmung behandelt werden. Als Förderelemente kommen in erster Linie Ventilatoren und Gebläse in Betracht. Erfindungsgemäß können aber auch Gase aus Versorgungsstationen, Druckluftnetzen oder Zapfluft von Flugzeugturbinen Verwendung finden.

In der Zeichnung ist eine der erfindungsgemäßen Sorptionsvorrichtung schematisch dargestellt.

Es zeigen:
Fig. 1a eine Sorptionsvorrichtung in geschnittener Darstellung, angeschlossen an drei Gasströmungskanäle,
Fig. 1b dieselbe Sorptionsvorrichtung im gedrehten Zustand und vor der Ankopplung an die Gasströmungskanäle aus Fig. 1a und
Fig. 2 eine Sorptionsvorrichtung während einer Regenerationsphase.

Die in Fig. 1a im Schnitt dargestellte Sorptionsvorrichtung 1 besteht aus einem mehrgliedrigen Sorptionsmittel-Behälter 2, gefüllt mit Sorptionsmittel 3, einem Ventil 4 und einem Verdampfer 5, der Arbeitsmittel 6 enthält. Die Oberfläche des ebenfalls mehrgliedrig aufgebauten Verdampfers 5 bildet den Arbeitsmittel-Wärmetauscher 7, während die Oberfläche des Sorptionsmittel-Behälters 2 zugleich die Wärmetauscherfläche des Sorptionsmittel-Wärmetauschers 8 bildet. Sowohl der Sorptionsmittel-Wärmetauscher 8 als auch der Arbeitsmittel-Wärmetauscher 7 sind von isolierten Gehäusen 9, 10 umgeben, welche die Gasströme V und S zwischen den beiden Sorber-Verbindungselementen 11,12 und den beiden Verdampfer-Verbindungselementen 13,14 lenken. An das Verbindungselement 13 ist ein Radialgebläse 15 angeschlossen, das den zu kühlenden Gasstrom V im Bedarfsfall über einen Filter 16 ansaugt und durch den Arbeitsmittel-Wärmetauscher 7 und das Verbindungselement 14 in einen Gasströmungskanal 17 presst, der ein Filterelement 18 enthält. Dieses Filterelement 18 schützt ebenso wie das identische Filterelement 19 im Gasströmungskanal 21 einen beliebigen Schutzraum 20 während eines Wechsels der Sorptionsvorrichtung vor dem Eindringen schädlicher Substanzen aus der Umgebungsluft. Der den Schutzraum 20 über den flexiblen Strömungskanal 21 verlassende Gasstrom S kühlt das Sorptionsmittel 3 über den Sorptionsmittel-Wärmetauscher 8 bis er durch das Verbindungselement 12 die Sorptionsvorrichtung verlässt.

Der Gasstrom V kann beim Abkühlen unterhalb des Taupunktes Wasser abtrennen, das in einem Kondensatsumpf 22 gesammelt wird und von dort über eine Kondensatleitung 23 auf den Sorptionsmittel-Wärmetauscher 8 durch die bestehende Druckdifferenz verteilt wird. Auf der Oberfläche des Sorptionsmittel-Wärmetauschers 8 kann das Kondensat wieder verdunsten und das Sorptionsmittel 3 zusätzlich kühlen. Der entstehende Dampf wird vom Gasstrom S aus der Sorptionsvorrichtung durch das Verbindungselement 12 ausgeblasen.

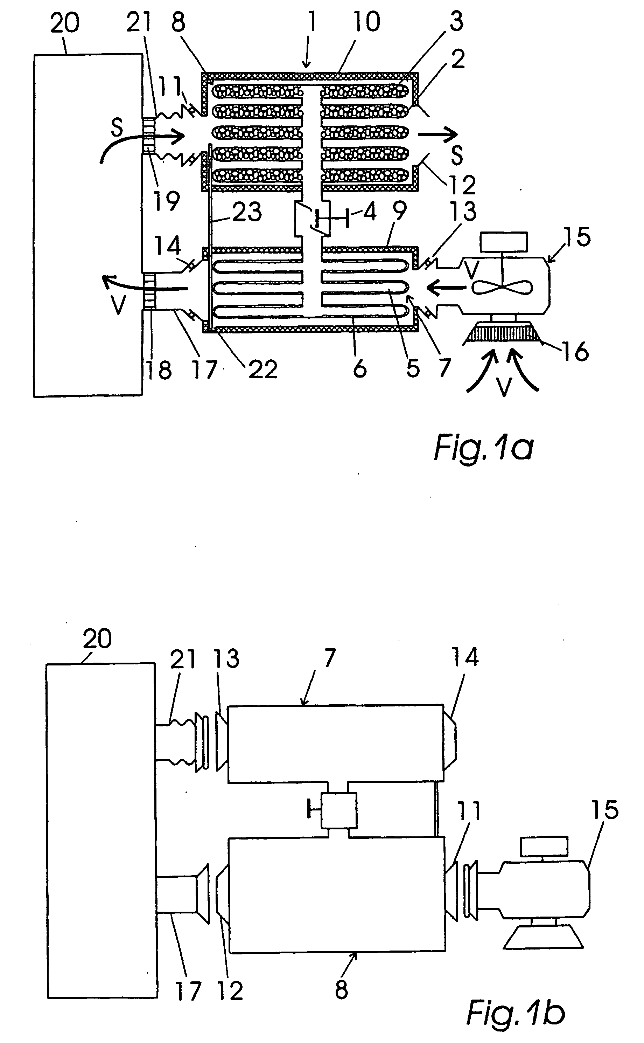

Fig. 1b enthält dieselben Komponenten wie Fig. 1a aber in nicht geschnittener und noch nicht angeschlossener Darstellung und mit dem Unterschied, dass die Sorptionsvorrichtung 1 gedreht ist, um den Schutzraum 20 zu beheizen und nicht wie in Fig. 1a zu kühlen. Das Radialgebläse 15 steht bereit um an das Verbindungselement 11 angeschlossen zu werden und um dann während des Heizbetriebes Umgebungsluft anzusaugen und nach Durchströmen des Sorptionsmittel-Wärmetauschers 8 in dann erwärmtem Zustand durch das Verbindungselement 12 und den Gasströmungskanal 17 in den Schutzraum 20 zu fördern. Die den Schutzraum 20 durch den Gasströmungskanal 21 verlassende Gasströmung wird dem Arbeitsmittel-Wärmetauscher 7 durch das Verbindungselement 13 zugeführt und verlässt durch das Verbindungselement 14 nach der Wärmeabgabe an das Arbeitsmittel die Sorptionsvorrichtung.

Die in den Fig. 1a und 1b gezeigte Durchströmung des Schutzraumes 20 ist von Vorteil, wenn mit nur einem einzigen Gebläse sowohl die Zufuhr von Verdampfungswärme als auch die Abgabe der Sorptionswärme erfolgen soll. Es kann aber auch vorteilhaft sein, den gekühlten oder geheizten Gasstrom aus dem Schutzraum 20 direkt wieder in die Umgebung abzuführen. In diesem Fall ist dann eine zusätzliche Luft- bzw. Gasversorgung vorzusehen, die den jeweils zweiten Wärmetauscher mit einem Gasstrom beaufschlagt.

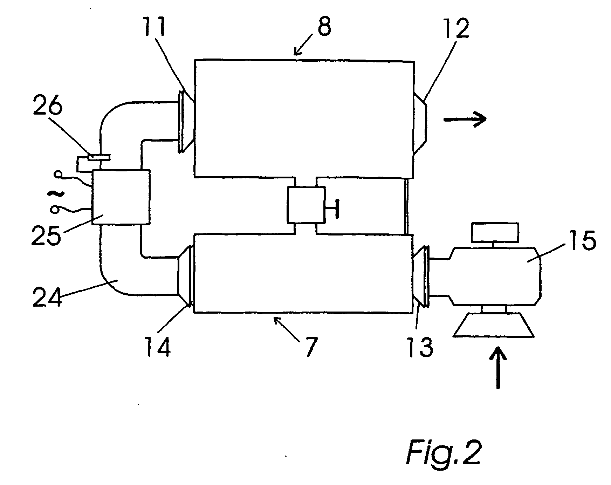

Fig. 2 zeigt schließlich die oben beschriebene Sorptionsvorrichtung 1 während einer Regenerationsphase. Das Radialgebläse 15 drückt Umgebungsluft durch das Verbindungselement 13 in den Arbeitsmittel-Wärmetauscher 7 und weiter durch das Verbindungselement 14 in ein Heizrohr 24, das ein elektrisches Heizelement 25 enthält, weiter durch das Verbindungselement 11 in den Sorptionsmittel-Wärmetauscher 8 und von dort durch das Verbindungselement 12 zurück in die Umgebungsluft. Damit fördert ein einziges Radialgebläse 15 einen einzigen Gasstrom durch die Sorptionsvorrichtung , der im Arbeitsmittel-Wärmetauscher 7 die Kondensationswärme aufnimmt, im Heizelement 25 auf über 350 °C erhitzt wird und im Sorptionsmittel-Wärmetauscher 8 die Wärme an das Sorptionsmittel abgibt. Somit ist durch einen einzigen Regelthermostaten 26, der im Luftstrom nach dem Heizelement 25 angeordnet ist, sichergestellt, dass das Sorptionsmittel auf die notwendige Temperatur gebracht wird und zugleich die Kondensationswärme aus dem Verdampfer sicher abgeleitet wird, um eine gefährliche Druckerhöhung in der Sorptionsvorrichtung zu verhindern.

## Patentansprüche

1. Sorptionsvorrichtung (1) zum Heizen und Kühlen von asströmen (V,S),
mit einem Sorptionsmittel-Behälter (2), der ein Sorptionsmittel (3) enthält, das ein Arbeitsmittel (6) sorbiert, das in einem Verdampfer (5) verdampft, der eine der Menge des Sorptionsmittels (3) angepasste Arbeitsmittelmenge (6) enthält, und
mit einem Sorptionsmittel-Wärmetauscher (8), der Wärme zwischen dem Sorptionsmittel (3) und einem Sorptionsmittel-Gasstrom (5) austauscht und mit einem Arbeitsmittel-Wärmetauscher (7), der Wärme zwischen dem Arbeitsmittel (6) und einem Arbeitsmittel-Gasstrom (V) austauscht, und mit einem absperrbaren Ventil (4) zwischen dem Sorptionsmittel-Behälter (2) und dem Verdampfer (5), das die Strömung des Arbeitsmitteldampfes unterbinden kann,
**dadurch gekennzeichnet, dass**
sowohl der Sorptionsmittel-Wärmetauscher (8) als auch der ArbeitsmittelWärmetauscher (7) an ihren Ein- und Ausgängen über Verbindungselemente (11,12,13,14) verfügen, die einen leicht lösbaren und untereinander tauschbaren Anschluss an Gasströmungskanäle (17,21) für das Zu- und Abströmen der zu erwärmenden bzw. abzukühlenden Gasströme (S,V) ermöglichen.

2. Sorptionsvorrichtung nach einem der vorangehenden Ansprüche,
**dadurch gekennzeichnet, dass**
die Verbindungselemente (11,12,13,14) geometrisch so angeordnet sind, dass durch Verdrehen oder Kippen der Sorptionsvorrichtung (1) die beiden Wärmetauscher (7,8) zwischen den Gasströmungskanälen ihre Position und damit ihre Funktion tauschen.

3. Sorptionsvorrichtung nach einem der vorangehenden Ansprüche,
**dadurch gekennzeichnet, dass**
das Ventil (4) als Regelventil ausgebildet ist, über das die thermodynamischen Zustände der aus den Wärmetauschern (7,8) austretenden Gasströme (S,V) beeinflusst werden können.

4. Sorptionsvorrichtung nach einem der vorangehenden Ansprüche,
**dadurch gekennzeichnet, dass**
der Sorptionsmittel-Behälter (2) so gestaltet ist, dass der durchschnittliche Wärmeleitweg im Sorptionsmittel (3) zur Oberfläche des Behälters weniger als 2 cm beträgt.

5. Sorptionsvorrichtung nach einem der vorangehenden Ansprüche,
**dadurch gekennzeichnet, dass**
Feuchtigkeit, die aus dem sich abkühlenden Gasstrom (V) im ArbeitsmittelWärmetauscher (7) auskondensiert, über eine Verbindung (23) in den Sorptionsmittel-Wärmetauscher (8) gelangen kann.

6. Sorptionsvorrichtung nach einem der vorangehenden Ansprüche,
**dadurch gekennzeichnet, dass**
die Sorptionsvorrichtung (1) körpernah getragen wird und durch seine Formgebung einen Beitrag zum Schutz gegen Projektile und Splitter leisten kann.

7. Sorptionsvorrichtung nach einem der vorangehenden Ansprüche,
**dadurch gekennzeichnet, dass**
die Sorptionsvorrichtung (1) geeignet ist, in einen Schutzraum (20) eingebracht zuwerden, in welchem die Gasströmungskanäle (17,21) münden.

8. Sorptionsvorrichtung nach Anspruch 7,
**dadurch gekennzeichnet, dass**
der Schutzraum 20 geeignete Umschaltvorrichtungen zur Lenkung der Gasströme (S,V) enthält.

9. Sorptionsvorrichtung nach einem der vorangehenden Ansprüche,
**dadurch gekennzeichnet, dass**
das Sorptionsmittel (3) Zeloith und das Arbeitsmittel (6) Wasser enthält.

10. Sorptionsvorrichtung nach einem der vorangehenden Ansprüche,
**dadurch gekennzeichnet, dass**
die Sorptionsvorrichtung (1) nur an eine einzige Luft- bzw. Gasversorgung (15) angeschlossenen ist und die Gasströme (S,V) so gelenkt sind, dass sowohl der Arbeitsmittel-Wärmetauscher (7) als auch der Sorptionsmittel-Wärmetauscher (8) durchströmt werden.

11. Sorptionsvorrichtung nach einem der vorangehenden Ansprüche,
**dadurch gekennzeichnet, dass**
die Ein- bzw. Ausgänge der Gasströmungskanäle (17,21) mit Filtern (18,19) versehen sind, die im Betrieb und/oder beim Wechsein der Sorptionsvorrichtung (1) giftige, kontaminierte oder verunreinigte Gasströme (S,V) vor dem Eintritt in den Schutzraum (20) reinigen bzw. entgiften

12. Verfahren zur Verwendung einer Sorptionsvorrichtung nach einem der vorangehenden Ansprüche,
**dadurch gekennzeichnet, dass**
ein zu erwärmender Gasstrom zuerst durch den Sorptionsmittel-Wärmetauscher (8) strömt, dort erwärmt wird, anschließend Wärme an einen Wärmeverbraucher abgibt und dann, zumindest als Teilstrom, zur weiteren Wärmeabgabe durch den Arbeitsmittel-Wärmetauscher (7) gelenkt wird.

13. Verfahren zur Verwendung einer Sorptionsvorrichtung nach einem der vorangehenden Ansprüche,
**dadurch gekennzeichnet, dass**
ein zu kühlender Gasstrom (V) zuerst durch den Arbeitsmittel-Wärmetauscher (7) strömt, dort gekühlt wird, anschließend Wärme von einem Wärmeverbraucher aufnimmt und dann, zumindest als Teilstrom, zur weiteren Wärmeaufnahme durch den Sorptionsmittel-Wärmetauscher (8) gelenkt wird.

14. Verfahren zur Verwendung einer Sorptionsvorrichtung nach einem der vorangehenden Ansprüche,
**dadurch gekennzeichnet, dass**
zum Regenerieren des Sorptionsmittels (3) ein Heißgasstrom über den Sorptionsmittel-Wärmetauscher (8) gelenkt wird und dass gleichzeitig ein Gasstrom über den Arbeitsmittel-Wärmetauscher (7) strömt, der die Kondensationswärme des Arbeitsmitteldampfes aufnimmt, um zu verhindern, dass der Kondensationsdruck höher als der Umgebungsdruck wird.

15. Verfahren zur Verwendung einer Sorptionsvorrichtung nach einem der vorangehenden Ansprüche,
**dadurch gekennzeichnet, dass**
die aus der Sorptionsvorrichtung (1) abströmenden Gasströme (S,V) geschlossene Räume, insbesondere Schutzbekleidung, Schutzzelte und Aufenthaltsräume heizen oder alternativ kühlen.

## Claims

1. Sorption device (1) for heating and cooling flows of gas (V, S), having a sorbent container (2) which contains a sorbent (3) which sorbs a working medium (6), which working medium (6) evaporates in an evaporator (5) which contains an amount of working medium (6) matched to the amount of sorbent (3), having a sorbent heat exchanger (8) which exchanges heat between the sorbent (3) and a sorbent flow of gas (S), and having a working-medium heat exchanger (7) which exchanges heat between the working medium (6) and a working-medium flow of gas (V), and having a closable valve (4) between the sorbent container (2) and the evaporator (5) which is able to stop the flow of evaporated working medium, **characterised in that** both the sorbent heat exchanger (8) and the working-medium heat exchanger (7) have, at their inlets and outlets, connecting elements (11, 12, 13, 14) which enable easily releasable and interchangeable connections to be made to gas-flow passages (17, 21) for the inflow and outflow of the flows of gas (S, V) to be heated and cooled.

2. Sorption device according to any one of the foregoing claims, **characterised in that** the connecting elements (11, 12, 13, 14) are geometrically arranged in such a way that, as a result of the sorption device (1) being turned or tilted, the two heat exchangers (7, 8) exchange their positions between the gas-flow passages, and hence their functions.

3. Sorption device according to either of the foregoing claims, **characterised in that** the valve (4) is in the form of a control valve by means of which the thermodynamic states of the flows of gas (S, V) emerging from the heat exchangers (7, 8) can be acted on.

4. Sorption device according to any one of the foregoing claims, **characterised in that** the sorbent container (2) is so constructed that the average distance for which heat is conducted in the sorbent (3) to the surface of the container is less than 2 cm.

5. Sorption device according to any one of the foregoing claims, **characterised in that** moisture which, in the working-medium heat exchanger (7), condenses out of the flow of gas (V) undergoing cooling is able to make its way into the sorbent heat exchanger (8) via a connection (23).

6. Sorption device according to any one of the foregoing claims, **characterised in that** the sorption device (1) is worn close to the body and, as a result of its configuration, is able to help in providing protection against projectiles and shrapnel.

7. Sorption device according to any one of the foregoing claims, **characterised in that** the sorption device (1) is suitable for being incorporated into a shelter (20) into which the gas-flow passages (17, 21) open.

8. Sorption device according to Claim 7, **characterised in that** the shelter (20) includes suitable change-over devices for directing the flows of gas (S, V).

9. Sorption device according to any one of the foregoing claims, **characterised in that** the sorbent (3) contains zeolite and the working medium (6) water.

10. Sorption device according to any one of the foregoing claims, **characterised in that** the sorption device (1) is connected to only a single air or gas supply (15) and the flows of gas (S, V) are so directed that flow takes place through both the working-medium heat exchanger (7) and the sorbent heat exchanger (8).

11. Sorption device according to any one of the foregoing claims, **characterised in that** the inlets and outlets of the gas-flow passages (17, 21) are provided with filters (18, 19) which, in operation and/or when the sorption device (1) is being changed, clean or detoxify toxic, contaminated or polluted flows of gas (S, V) before they enter the shelter (20).

12. Method of using a sorption device according to any one of the foregoing claims, **characterised in that** a flow of gas to be heated first flows through the sorbent heat exchanger (8) and is heated there, then releases heat to a heat consumer, and then, at least in the form of a partial flow, is directed through the working-medium heat exchanger (7) to allow further heat to be released.

13. Method of using a sorption device according to any one of the foregoing claims, **characterised in that** a flow of gas (V) to be cooled first flows through the working-medium heat exchanger (7) and is cooled there, then absorbs heat from a heat consumer, and then, at least in the form of a partial flow, is directed through the sorbent heat exchanger (8) to allow further heat to be absorbed.

14. Method of using a sorption device according to any one of the foregoing claims, **characterised in that**, to regenerate the sorbent (3), a flow of hot gas is directed via the sorbent heat exchanger (8) and **in that**, at the same time, a flow of gas flows via the working-medium heat exchanger (7), which flow of gas absorbs the heat of condensation from the vapour of the working medium to stop the condensation pressure from becoming higher than the ambient pressure.

15. Method of using a sorption device according to any one of the foregoing claims, **characterised in that** the flows of gas (S, V) flowing out of the sorption device (1) heat, or alternatively cool, enclosed spaces and in particular protective clothing, protective tents and rooms for temporary occupation.

## Revendications

1. Dispositif de sorption (1) pour le réchauffement et le refroidissement de flux de gaz (V, S) comprenant un récipient à sorbant (2) contenant un sorbant (3), qui absorbe un sorbant (6) s'évaporant dans un évaporateur (5), lequel contient une quantité de substance active (6) adaptée à la quantité du sorbant (3), et
avec un échangeur de chaleur à sorbant (8), qui échange de la chaleur entre le sorbant (3) et un flux de gaz à sorbant (5) et avec un échangeur de chaleur à substance active (7), qui échange de la chaleur entre le substance active (6) et un flux de gaz à substance active (V), et avec une vanne (4) pouvant être fermée entre le récipient à sorbant (2) et l'évaporateur (5), qui peut supprimer l'écoulement de la vapeur de substance active,
**caractérisé en ce que**
aussi bien l'échangeur de chaleur à sorbant (8) que l'échangeur de chaleur à substance active (7) disposent sur leurs entrées et sorties d'éléments de liaison (11, 12, 13, 14), qui permettent un raccordement facilement détachable et interchangeable à des canaux d'écoulement de gaz (19, 21) pour l'arrivée et l'évacuation des flux de gaz (S,V) à réchauffer et à refroidir.

2. Dispositif de sorption selon l'une quelconque des revendications précédentes,
**caractérisé en ce que**
les éléments de liaison (11, 12, 13, 14) sont disposés au plan géométrique de telle sorte que, par la rotation ou le basculement du dispositif de sorption (1), les deux échangeurs de chaleur (7, 8) entre les canaux d'écoulement de gaz permutent leur position et donc leur fonction.

3. Dispositif de sorption selon l'une quelconque des revendications précédentes,
**caractérisé en ce que**
la vanne (4) est conçue comme une vanne de réglage par laquelle on peut influencer les états thermodynamiques des flux de gaz (S, V) sortant des échangeurs de chaleur (7, 8).

4. Dispositif de sorption selon l'une quelconque des revendications précédentes,
**caractérisé en ce que**
le récipient à sorbant (2) est conçu de telle sorte que la course moyenne d'acheminement de chaleur dans le sorbant (3) par rapport à la surface du récipient est inférieure à 2 cm.

5. Dispositif de sorption selon l'une quelconque des revendications précédentes,
**caractérisé en ce que**
de l'humidité, qui se condense à la sortie du flux de gaz (V) se refroidissant dans l'échangeur de chaleur à substance active (7), peut arriver par une liaison (23) dans l'échangeur de chaleur à sorbant (8).

6. Dispositif de sorption selon l'une quelconque des revendications précédentes,
**caractérisé en ce que**
le dispositif de sorption (1) est porté près du corps et peut contribuer de par sa forme à la protection contre les projectiles et les éclats.

7. Dispositif de sorption selon l'une quelconque des revendications précédentes,
**caractérisé en ce que**
le dispositif de sorption (1) est approprié pour être introduit dans un espace de protection (20), dans lequel débouche les conduits d'écoulement de gaz (17, 21).

8. Dispositif de sorption selon la revendication 7,
**caractérisé en ce que**
l'espace de protection (20) contient des dispositifs d'inversion appropriés pour le guidage des flux de gaz (S, V).

9. Dispositif de sorption selon l'une quelconque des revendications précédentes,
**caractérisé en ce que**
le sorbant (3) contient de la zéolithe et la substance active (6) de l'eau.

10. Dispositif de sorption selon l'une quelconque des revendications précédentes,
**caractérisé en ce que**
le dispositif de sorption (1) est raccordé seulement à une alimentation unique en air et en gaz (15) et les flux de gaz (S, V) sont dirigés de telle sorte qu'aussi bien l'échangeur de chaleur à substance active (7) que l'échangeur de chaleur à sorbant (8) sont traversés.

11. Dispositif de sorption selon l'une quelconque des revendications précédentes,
**caractérisé en ce que**
les entrées et sorties des canaux d'écoulement de gaz (17, 21) sont pourvues de filtres (18, 19) qui nettoient ou désintoxiquent pendant le fonctionnement et/ou lors du remplacement du dispositif de sorption (1) des flux de gaz (S, V) toxiques, contaminés ou souillés avant l'entrée dans l'espace de protection (20).

12. Procédé pour l'utilisation d'un dispositif de sorption selon l'une quelconque des revendications précédentes,
**caractérisé en ce que**
un flux de gaz à réchauffer passe d'abord à travers l'échangeur de chaleur à sorbant (8), est réchauffé à cet endroit, transmet ensuite de la chaleur à un échangeur de chaleur et est guidé ensuite, au moins sous forme de flux partiel, pour le dégagement de chaleur ultérieur à travers l'échangeur de chaleur à substance active (7).

13. Procédé pour l'utilisation d'un dispositif de sorption selon l'une quelconque des revendications précédentes,
**caractérisé en ce que**
un flux de gaz à refroidir (V) circule d'abord à travers l'échangeur de chaleur à substance active (7), est refroidi à cet endroit, reçoit ensuite de la chaleur d'un consommateur de chaleur et est guidé ensuite, au moins sous forme de flux partiel, pour la réception de chaleur ultérieure à travers l'échangeur de chaleur à sorbant (8).

14. Procédé pour l'utilisation d'un dispositif de sorption selon l'une quelconque des revendications précédentes,
**caractérisé en ce que**
pour la régénération du sorbant (3), un flux de gaz chaud est guidé par l'échangeur de chaleur à sorbant (8) et **en ce que** simultanément un flux de gaz s'écoule par l'échangeur de chaleur à substance active (7), qui reçoit la chaleur de condensation de la vapeur de substance active, afin d'empêcher que la pression de condensation soit plus élevée que la pression ambiante.

15. Procédé pour l'utilisation d'un dispositif de sorption selon l'une quelconque des revendications précédentes,
**caractérisé en ce que**
les flux de gaz (S, V) s'écoulant hors du dispositif de sorption (1) chauffent ou refroidissent en alternance des espaces fermés, en particulier un uniforme de protection, des tentes de protection et des espaces de séjour.
